# NEUE EUROPÄISCHE PATENTSCHRIFT

(11) **EP 0 379 841 B2**
(45) Veröffentlichungstag und Bekanntmachung des Hinweises auf die Entscheidung über den Einspruch: **04.11.1998**
(45) Hinweis auf die Patenterteilung: 15.09.1993
(21) Anmeldenummer: 89810928.5
(22) Anmeldetag: 08.12.1989
(51) Int. Cl.: G01L 21/12, G01L 21/22

(54) **Gasdruck-Messgerät**
Gas pressure measuring apparatus
Appareil de mesure de pression d'un gaz

(30) Priorität: 23.01.1989 CH 206/89
(43) Veröffentlichungstag der Anmeldung: 01.08.1990
(73) Patentinhaber: BALZERS AKTIENGESELLSCHAFT, 9496 Balzers (LI)
(72) Erfinder: Stocker, Rudolf, Dr., CH-9478 Azmoos (CH); Schaedler, Walter, FL-9496 Balzers (LI)
(74) Vertreter: Frei, Alexandra Sarah

(56) Entgegenhaltungen:
- EP-A- 0 238 297
- DE-A- 2 347 543
- DE-A- 3 518 388

## Beschreibung

Die Erfindung liegt auf dem Gebiet der Messtechnik und betrifft ein Verfahren zur Messung von Gasdrücken im Niederdruckbereich, sowie eine Vorrichtung zum Durchführen des Verfahrens.

Im Niederdruckbereich werden zur Messung des Totaldruckes in der Regel Wärmeleitungs- und Reibungsmanometer sowie Ionisationsmanometer verwendet. Neuerdings werden auch Quarzmanometer verwendet, die zur Gattung Gasreibungsmanometer zählen.

Alle indirekten Messverfahren sind abhängig von der Gasart. Das Gasreibungsverfahren, wie alle indirekt messenden Verfahren, verhalten sich je nach Molekülart, die sich in der Messumgebung, also im Einflussbereich des Sensors befinden, entsprechend verändert.

Besprochen werden hier das Wärmeleitungs- und das Gasreibungsverfahren. Dabei ist es das Ziel der Erfindung, die Gasartabhängigkeit durch ein geeignetes verfahrensmässiges Vorgehen zu verringern. Es soll ferner aufgezeigt werden, wie eine Messvorrichtung mit verringerten Gasartabhängigkeit geschaffen werden kann.

Zur Diskussion des erfindungsgemässen Vorgehens, werden die nachfolgenden Figuren zu Hilfe genommen:
- Figur 1: zeigt ein Diagramm der Druckabhängigkeit zweier Sensoren von der Molekülmasse
- Figur 2: zeigt den prinzipiellen Aufbau eines kompensierenden Gasdruckmessgerätes
- Figur 3: zeigt eine Prinzipschaltung zum Zusammenführen der Signale zweier Druckmess-Sensoren

In der Folge werden kurz die Funktionsprinzipien der beiden verwendeten Sensorentypen, die sich wohl sehr voneinander unterscheiden, aber doch eine wesentliche Gemeinsamkeit haben, besprochen. Wenn nun bei den indirekt messenden Wärmeleitungsmanometern der Transport thermischer Energie von Einzelmolekülen oder Atomen von einem elektrisch geheizten Draht über die Wärmeleitung des Umgebungsgases (mit dessen molaren Wärmekapazität) auf einen, diesen Draht umgebenden Zylinder zur Messung des Druckes herangezogen wird, so nützt man bei den direkt messenden Gasreibungsmanometern die direkte Einwirkung der Moleküle oder Atome auf das Messelement aus.

Beim Gasreibungsmanometer, bspw. einem Quarzmanometer, ist die Schwingungsdämpfung umso grösser, je grösser die Molekülmasse der Partikel ist, die auf die schwingenden Bauelemente (Schenkel) auftreffen. Mit zunehmender Molekülgrösse fiihrt dies zu einer fehlerhaften (zu hohen) Druckanzeige. Als Mass für den Druck wird eine Seriewiderstand bei Resonanz gemessen (siehe auch CH-Patentanmeldung vom 23.1.89 "Verschmutzungskompensation" desselben Anmelders bzw. Erfinders) Dieser Seriewiderstand ist im wesentlichen proportional zur Wurzel aus M, wobei M die Molekülmasse bedeutet

Siehe dazu:
K. Kokubun et al., J. Vac. Sci. Technol.
Bd. A5, S. 2450 ff., 1987

Man kann nun davon ausgehen, dass bei Wärmeleitungssmanometern, bei denen ein bestimmtes kinetisches Energiepotential (Gleichgewichts-Zustand) als Referenz dient und die Abweichungen davon als Druck interpretiert werden, die Grösse der kinetische Energie des Umgebungsgases eine ähnlich grosse Rolle spielt.

Heisse Körper verlieren ihre Energie hauptsächlich durch Wärmeleitung im Gas und ein wenig durch Strahlung. Veränderungen dieses Gleichgewichtes, die von Druckveränderungen herrühren, werden als Druckänderung interpoliert. Als unmittelbare elektrische Messgrösse für die Temperatur, kann der elektrische (temperaturabhängige) Widerstand des Heizdrahtes herangezogen werden. Die Wärmeleitung von der Quelle zur Senke ist ein molekularer Vorgang, nämlich die Übertragung von Impuls und Energie von den Molekeln (oder Atomen) wärmerer Körper auf die Molekel kälterer Körper (statistische Thermodynamik).

Bei einem Pirani-Sensor ist bspw. ein geheizter Draht als Wärmequelle von einem "kalten" Zylinder als Wärmesenke umgeben. Der emittierende Draht sieht sich einer Umgebung gegenüber, die, zeitlich konstant und auch zeitlich veränderlich, Wärme aufnimmt. Molekel, die sich räumlich vor der Senke (Zylinder) aufhalten, gehören zu dieser "Umgebung" und reagieren auf die elastischen Stösse der emittierten Atome entsprechend ihrer Masse mit einem grösseren oder oder einem kleineren Geschwindigkeitszuwachs. Die Wechselwirkung mit der Umgebung ist bei Anwesenheit schwererer Moleküle träger, sie nimmt weniger Energie auf. Eine solche Umgebung dämpft also, mikroskopisch gesehen, den mechanischen Prozess zwischen den Materiepartikeln.

Beobachtungen zeigen, dass bspw. beim Pirani-Manometer mit zunehmender Molekülmasse eine fehlerhafte (zu tiefe) Druckanzeige stattfindet. Die Leistung ist über einen gewissen Druckbereich im wesentlichen umgekehrt proportional zur Wurzel aus M.

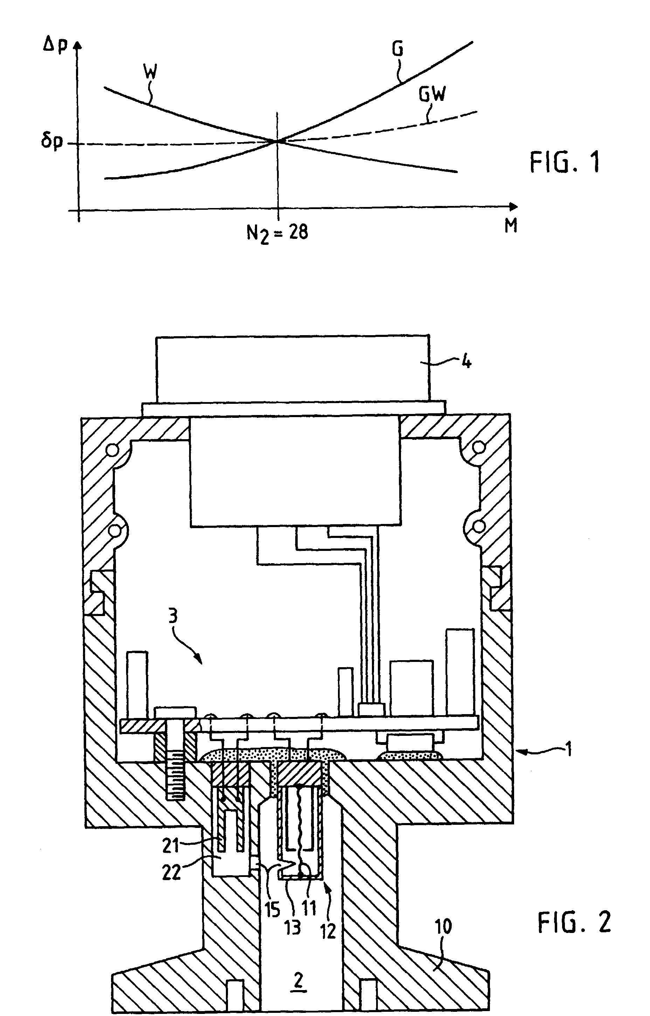

Siehe dazu:
1. S. Dushman and J.M. Lafferty, Scient. Found. of Vacuum-technique, Wiley 1962.
2. Ch. Edelmann und H.G. Schneider, Vakuumphysik und-technik, Akad. Verlagsgesellschaft 1978. Jedes der oben diskutierten Phänomene führt zu einem Fehlverhalten des betroffenen Sensors, interessanterweise zu einem umgekehrt proportionalen, wie dies in Fig. 1 darzustellen versucht wird. Der Piezoschwinger zeigt eine Gasartabhängikeit, die Im wesentlichen proportional zu √M und der Piranisensor eine solche die umgekehrt proportional zu √M ist.

Kommt man auf die Idee, die Messresultate eines Reibungsmanometers und eines Wärmeleitungsmanometers miteinander zu verknüpfen, bzw. zu verarbeiten, so würde daraus eine gewisse Unabhängigkeit einer Druck-Messung, die mit beiden Sensoren gleichzeitig durchgeführt wird, in Bezug auf die Partikelmasse der Umgebungsgase resultieren. Das Diagramm in Figur 1 zeigt eine Druckabweichungen Delta p in Funktion der Molekül- oder Atommasse je einer Funktion W für ein Wärmeleitungsmanometer und Funktion G für ein Gasreibungsmanometer. Beide Funktionen G und W sind willkürlich dargestellt, sie sollen lediglich den qualitativen Verlauf angeben. Gestrichelt eingezeichnet ist die Funktion einer Verknüpfung G·W der beiden Funktionen. Ebenso willkürlich ist am Kreuzungspunkt der beiden Funktionen ein Stickstoffmolekel mit der Molekül-Masse M=28 eingezeichnet, welches einer Druckabweichung δρ entspricht. Damit soll lediglich gezeigt werden, dass die durch die Verknüpfung herbeigeführte Kompensation keine absolute sondern eine relative ist. Die Abwelchung δp würde demgemäss einem konstanten (bspw. systematischen) Fehler entsprechen, doch die Funktion G·W zeigt, dass deren Druckabweichung sehr viel weniger von der Molekülmasse abhängt, als irgendeine der beiden anderen Funktionen G und W.

Dies ist in der Tat auch so. Misst man im selben Milieu gleichzeitig mit einem Quarzmanometer und einem Piranimanometer in Bezug zu einem Absolutdrucknormal bspw. im Stickstoffunterdruck und tauscht dann N₂- Moleküle in molar gleichem Verhältnis sukzessive gegen H₂-Moleküle aus, so wird man bei einer "kompensatorischen" Signalverknüpfung, nur eine geringe Druckänderung beobachten können, die wesentlich geringer ist, als diejenige der beiden Einzelsignale, welche gemäss bekanntem Verhalten grössere Fehlmessungen aufweisen. Es ist also schon mit einer Signaladdition bzw. -multiplikation eine markante Verbesserung zu erzielen.

Als Verknüpfungen kommen in Frage, die lineare Ueberlagerung oder Addition der G- und W-Signale, als schaltungstechnisch einfachste Vorgehensform, die Multiplikation der G- und W-Signale, etwas aufwendiger aber dafür optimal, sowie weitere Verknüpfungen, auf die hier nicht eingegangen wird. Eine Verbesserung der Gasartunabhängigkeit lässt sich durch Logarithmieren der Nettomesswerte (das ist der Messwert minus der Messwert bei Hochvakuum), Gewichtung und nachfolgende Addition erreichen. Bei beiden genannten Verknüpfungen ist eine exakte Kompensation nicht gegeben. Mit erhöhtem Rechenaufwand kann die Gasartabhängigkeit weiter verkleinert werden.

Wie aber eine möglichst exakte Kompensation bei verschiedenen Gasen herbeigeführt werden kann, ist Gegenstand von experimentellen Messungen und der Anwendung verfeinerter Theorien, wie sie in der Litertur beschrieben sind, also Fleissarbeit, deren Resultate aber in Vorrichtungen, die nach dem erfindungsgemässen Verfahren arbeiten, verwendet werden können. Jedenfalls kann durch die Kombination oder besser Verknüpfung bzw. Verarbeitung der beiden, aus verschiedenen Messprinziplen hervorgegangenen Signale eine allgemeine Verbesserung der Messgenauigkeit erreicht werden.

Ein beispielsweises Vorgehen ist, einen Piranimanometer und einen Quarzmanometer auf dem gleichen Stutzen anzuordnen, zumindest jedoch so, dass beide Sensoren In einem gemeinsamen Druckvolumen, das nicht zu gross ist, angeordnet sind. Die analogen Signale, das Ausgangssignal eines Piranisensors und das Ausgangssignal eines Quarzmanometers werden bspw. in einem Addierer (Op-Amp) addiert oder in einem Analog-Multiplizierer multipliziert. Die Ausgangsspannung des Addierers oder des Multiplizierers verhält sich proportional zum gemessenen Druck Beim Piranisensor wird vor der Signalverarbeitung mittels Verknüpfung das Ausgangssignal (von bekannten Nulleffekten) bereinigt Statt analog vorzugehen, können die Signale der beiden Sensoren digitalisiert und rechnerisch zusammengesetzt werden. Auf diesem Weg können gleich noch weitere Korrekturfaktoren, Parameter, bspw. ein -δp, etc. eingebracht werden.

Bei den Quarzkristallschwingern (Stimmgabelschwingern) ist die Temperaturstabilisierung ein besonderes Problem, mit welchem sich die schon oben genannte CH-Patentanmeldung vom 23.1.89 desselben Autors (Teil, der sich mit der Temperaturstabilisierung befasst) auseinandersetzt. Da der Piranisensor ein Wärmeleitungssensor ist und eine hochstabilisierte Temperatur aufweist, kann er gleichzeitig auch zum Thermostatisieren des Stimmgabelschwingers verwendet werden. Auf diese Weise kann der Thermostatisieraufwand der Piranizelle gleichsam mitverwendet werden. Ein solcher Vorschlag besteht darin, dass der Stimmgabelschwinger in seinem mit einer Oeffnung versehenen Gehäuse frei aufgehängt wird, dass das Gehäuse mit einem Heizelement versehen ist, dass dieses Heizelement so ausgewählt wird, dass sein Widerstand einen Temperaturkoeffizienten ungleich Null aufweist, sodass es zusätzlich zur Funktion des Thermostatisierens noch als PiraniManometer verwendet werden kann. Dies ist die optimale Ausgestaltung. Eine vorteilhafte Befestigung des Pirani/Piezo-Sensorelements kann in seiner bevorzugten Form der parallel angemeldeten CH-Patentanmeldung vom 23.1.89 "Mechanische Aufhängung eines Stimmgabelquarzmanometers" entnommen werden.

Bei dem in Figur 2 dargestellten Prinzipschema eines kompensatorischen Gasreibungs-/Wärmeleitungs-Manometer ist eine Ausführungsform für eine Messvorrichtung, zur Durchführung des erfindungsgemässen Verfahrens gezeigt. Die Vorrichtung besteht aus einem Gehäuse 1, welches mit einem nicht dargestellten Messvolumen verbunden werden kann. Das Gehäuse weist eine gegen das Messvolumen geöffnete Bohrung 2 in einem Flansch 10 auf, in welcher ein Wärmeleitungssensor 12, bspw. eine Piranizelle mit Glühdraht 11 und Zylinder 13 angeordnet ist. Zusätzlich weist das GW-Manometer noch einen Gasreibungssensor 22, bspw. ein handelsüblicher Uhrenquarz auf, der in einer Bohrung 22 des Gehäuses 1 untergebracht ist Beide Sensoren sind elektrisch mit einer Schaltung 3 verbunden. Der Quarz ist zur Ankoppelung an den Messraum mit einer seitliche Öffnung 15 ausgestattet, so dass der Quarz mit dem Messvolumen druckmässig in Verbindung steht Auch beim Piranisensor ist eine Oeffnung 15 zur Ankoppelung an das Messvolumen vorgesehen. Beide Oeffnungen 15 sind so angeordnet, dass sie in das gleiche Druckvolumen führen. Eventuelle Abweichungen zum Absolutdruck gehen als Fehler δp ein und haben mit der Gasartabhängigkeit nichts zu tun. Die im Gehäuse 1 enthaltene elektronische Schaltung 3 ist zum Betrieb des Quarzes und zum Betrieb der Piranizelle, sowie zur Auswertung der Ausgangssignale beider Sensoren ausgelegt. Damit ist nun eine vorrichtungemässige Realisierung der Funktion G·W gemäss Diagramm In Figur 1 möglich. Die Signale für die kombinierte Funktion können schaltungemässig analog oder digital verarbeitet werden (vgl. die nachstehenden Ausführungen), im letzteren Fall kann die Verarbeitungsvorschrift als Programm in einem z.B. in die Schaltung 3 integrierten Mikroprozessor abgearbeitet werden Durch vorgängige Eichung können Konstanten wie -δp entweder hard- oder softwaremässig eingebracht werden. Seibstverständlich ist auch eine Kombination von hard- und softwaremässigen Lösungen möglich.

Der Vorteil einer solchen Ausführung besteht im wesentlichen darin, dass durch geeignete Verknüpfung der Ausgangssignale des Messquarzes mit denjenigen der Piranizelle eine weitgehende Kompensation der Gasartabhängigkeit realisiert werden kann.

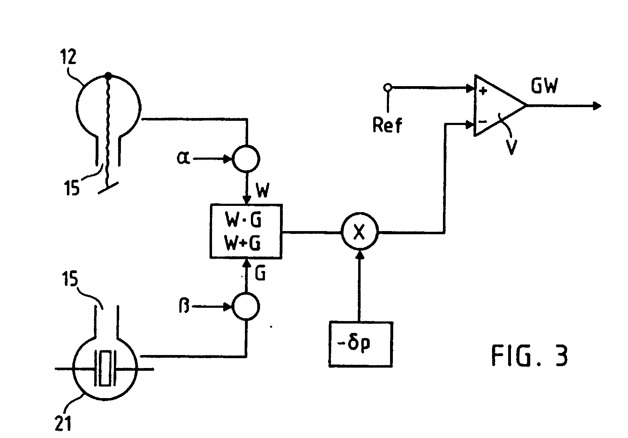

Figur 3 zeigt eine Prinzipschaltung, gemäss welcher die Ueberlagerung der Ausgangsignale einer Piranizelle und einem Stimmgabeiquarz realisiert werden kann. Das Ausgangs-Signal W einer Piranizelle 12 und das Ausgangs-Signal G eines Stimmgabelquarzes G werden in einer Verknüpfungsschaltung die eine Additionsschaltung W+G sein kann, addiert oder die eine Multiplikationsschaltung W·G sein kann, multipliziert. Das Ausgangssignal G+W+δp bzw. G·W+δp, wird In einer weiteren Additionsschaltung x mit einem dem konstanten Fehler δp entgegengesetzter Wert -δp addiert, um schliesslich an der Verstärkerschaltung V den möglichst exakten Druckmesswert GW zu erhalten.

Vor dem Einspeisen in die Verknüpfungsschaltung werden die Signale aus jedem Sensor vorzugweise einer "bereinigenden" Behandlung unterworfen, in dem bspw. die Werte α und β dem Signal zugeordnet werden, α bspw. als Zuwert um Nulleffekte zu eliminieren bei der Addition und β bspw. als Gewichtungsfaktor bei einer Multiplikation.

Es ist klar, dass die oben angegebene Addition bzw. Multiplikation statt analog auch rechnerisch durchgeführt werden kann, in dem die Sensorsignale aus einem Wärmeleitungsmanometer und einem Gasreibungsmanometer im allgemeinen und einem Piranimanometer und einem Quarzmanometer im speziellen digitalisiert und als Daten in einem Programm abgearbeitet werden. Auf Grund Ihrer Fehlercharakteristik lassen sich nicht alle Wärmeleitungssensoren gleich gut mit einem Quarzmanometer kombinieren, ebenso nicht alle Gasreibungsmanometer mit einem Piranimenometer, bei der digitalen Verarbeitung der Sensorsignale hat man jedoch noch besser die Möglichkeit, Korrekturen einzubringen, die bei einer analogen Verarbeitung nicht mehr möglich sind.

## Patentansprüche

1. Verfahren zum Messen von Druck, vorzugsweise Vakuum, mit einem Wärmeleitungsmanometer und einem zweiten Manometer in einem gemeinsamen Messraum, wobei die Mess-Signale der beiden Manometer zu einem gemeinsamen Mess-Signal verarbeitet werden, dadurch gekennzeichnet, dass ein Gasreibungsmanometer als zweites Manometer eingesetzt wird, so dass die einzelnen Mess-Signale der beiden Manometer gegenläufig von der Gasart und von der Molekülmasse eines zu messenden Gases abhängig sind und wobei die Mess-Signale der beiden Manometer so zu einem gemeinsamen Mess-Signal verarbeitet werden, dass sich dabei deren einzelne Gasartabhängigkeiten gegenseitig weitgehend kompensieren und damit ein gasartunabhängiges, gemeinsames Mess-Signal erzeugt wird.

2. Verfahren nach Anspruch 1, dadurch gekennzeichnet, dass die Messignale des Wärmeleitungsmanometers und die Mess-Signale des Gasreibungsmanometers zur Bildung eines gemeinsamen Mess-Signals linear überlagert werden.

3. Verfahren nach Anspruch 1 oder 2, dadurch gekennzeichnet, dass die Messignale des Wärmeleitungsmanometers und die Mess-Signale des Gasreibungsmanometers zur Bildung eines gemeinsamen Mess-Signals addiert werden.

4. Verfahren nach Anspruch 1, dadurch gekennzeichnet, dass die Messignale des Wärmeleitungsmanometers und die Mess-Signale des Gasreibungsmanometers zur Bildung eines gemeinsamen Mess-Signals multipliziert werden.

5. Verfahren nach Anspruch 4, dadurch gekennzeichnet, dass die Signale vor dem multiplizieren gewichtet werden.

6. Verfahren nach einem der Ansprüche 1 bis 5, dadurch gekennzeichnet, dass die Signale vor der Bildung eines gemeinsamen Mess-Signals durch Gewichtung undloder Bereinigung von Nulleffekten undloder Logarithmierung vorverarbeitet werden.

7. Verfahren nach einem der Ansprüche 1 bis 6, dadurch gekennzeichnet, dass dem gemeinsamen Mess-Signal Korrekturwerte zugeordnet werden.

8. Verfahren nach Anspruch 7, dadurch gekennzeichnet, dass die Korrekturwerte Werte konstanter Abweichung (systematische Fehler) sind.

9. Verfahren nach einem der Ansprüche 1 bis 8, dadurch gekennzeichnet, dass als Wãrmeleitungsmanometer ein Piranimanometer und als Gasreibungsmanometer ein Stimmgabeiquarzmanometer verwendet wird.

10. Verfahren nach Anspruch 9, dadurch gekennzeichnet, dass das Piranimanometer als Thermostat für das Quarzkristallmanometer oder der Thermostat des Quarzkristallmanometers als Piranimanometer verwendet wird.

11. Kompensationsmanometer zur gasartunabhängigen Messung von Drücken, vorzugsweise Vakkuum, gegekennzeichnet durch die Anordnung eines Wärmeleitungsmanometers und eines Gasreibungsmanometers in einem gemeinsamen Messraum und durch eine mit den Manometern gekoppelte Signalverarbeitungseinheit, mit welcher die Signale der beiden Manometer zu einem gemeinsamen Ausgangssignal verknüpft werden.

12. Kompensationsmanometer nach Anspruch 11, dadurch gekennzeichnet, dass in der Signalverarbeitungseinheit eine Funktion veorgesehen ist, durch welche dem gemeinsamen Signal Korrekturwerte aufgeprägt werden können.

13. Kompensationsmanometer nach Anspruch 11 oder 12, dadurch gekennzeichnet, dass ein Piranimanometer und ein Stimmgabelquarzmanometer in einem gemeinsamen Messraum angeordnet sind und die Signalverarbeitungseinheit eine Addiereinheit ist.

14. Kompensationsmanometer nach Anspruch 11 oder 12, dadurch gekennzeichnet, dass ein Piranimanometer und ein Stimmgabelquarzmanometer in einem gemeinsamen Messraum angeordnet sind und die Signalverarbeitungseinheit eine Multipliziereinheit ist.

15. Kompensationsmanometer nach Anspruch 11 bis 15, dadurch gekennzeichnet, dass nach dem Piranimanometer und dem Stimmgabeiquarzmanometer vor der Schaltung für die Verknüpfung der Signale Schaltungen zur Vorverarbeitung der Signale vorgesehen sind.

16. Kompensationsmanometer nach Anspruch 15, dadurch gekennzeichnet, dass die Schaltung zur Vorverarbeitung der Signale eine Logarithmierfunktione enthält.

17. Kompensationsmanometer nach einem der Ansprüche 11 bis 9, dadurch gekennzeichnet, dass Mittel zum Digitalisieren der Manometersignale und Mittel zum Verwerten der digitalisierten Signale vorgesehen sind.

18. Kompensationsmanometer nach einem der Ansprüche 11 bis 17, dadurch gekennzeichnet, dass die Thermostatisierung des Quarzkristallmanometers als Teil eines Piranimanometers ausgebildet ist.

## Claims

1. Process for measuring pressure, preferably vacuum, with a heat conduction gauge and a second pressure gauge in a common measuring area whereby the measuring signals of the two pressure gauges are processed to a common measuring signal, characterised in that a gas friction gauge is used as second pressure gauge, so that the individual dependencies on gas type and molecular mass of a gas to be measured are reversed to each other and whereby the signals of the two pressure gauges are so processed to a common signal that their individual gas type-dependencies are largely compensating each other and thus are forming a gas type-independent common measuring signal.

2. Process according to claim 1, characterized in that the measuring signals of the heat conduction gauge and the measuring signals of the gas friction gauge are linearly superimposed for forming a common measuring signal.

3. Process according to claims 1 or 2, characterized in that the measuring signals of the heat conduction gauge and the measuring signals of the gas friction gauge are added for forming a common measuring signal.

4. Process according to claim 1, characterized in that the measuring signals of the heat conduction gauge and the measuring signals of the gas friction gauge are multiplied for forming a common measuring signal.

5. Process according to claim 4, characterized in that the signals are weighted prior to multiplication.

6. Process according to one of the claims 1 to 5, characterized in that prior to the formation of a common measuring signal, the signals undergo prior processing by weighting and/or removing zero effects and/or logarithmating.

7. Process according to one of the claims 1 to 6, characterized in that correction values are associated with the common measuring signal.

8. Process according to claim 7, characterized in that the correction values are constant variation values (systematic errors).

9. Process according to one of the claims 1 to 8, characterized in that a Pirani gauge is used as the heat conduction gauge and a tuning fork quartz gauge as the gas friction gauge.

10. Process according to claim 9, characterized in that the Pirani gauge is used as a thermostat for the quartz crystal gauge or the thermostat of the quartz crystal gauge is used as the Pirani gauge.

11. Compensation gauge for the gas type-independent measurement of pressures, preferably vacuum, characterized by the arrangement of a heat conduction gauge and a gas friction gauge in a common measuring area and by a signal processing unit coupled to the gauges by means of which the signals of the two gauges are combined to form a common output signal.

12. Compensation gauge according to claim 11, characterized in that in the signal processing unit is provided a function by correction values can be applied to the common signal.

13. Compensation gauge according to claims 11 or 12, characterized in that a Pirani gauge and a tuning fork quartz gauge are located in a common measuring area and the signal processing unit is an adding unit.

14. Compensation gauge according to claims 11 or 12, characterized in that a Pirani gauge and a tuning fork quartz gauge are placed in a comnon measuring area and the signal processing unit is a multiplying unit.

15. Compensation gauge according to claims 11 to 14, characterized in that circuits for the preprocessing of the signals are provided upstream of the circuit for combining the signals following the Pirani gauge and the tuning fork quartz gauge.

16. Compensation gauge according to claim 15, characterized In that the circuit for the preprocessing of the signals contains a logarithmating function.

17. Compensation gauge according to claims 11 to 16, characterized in that means for digitizing the gauge signals and means for evaluating the digital signals are povided.

18. Compensation gauge according to one of the claims 11 to 17, characterized in that the thermostatic control of the quartz crystal is constructed as part of a Pirani gauge.

## Revendications

1. Procédé pour mesurer une pression, de préférence un vide, avec un manomètre à conductibilité thermique et un deuxième manomètre à l'interieur d'un espace de mesure commun, dont les signaux de mesures des deux manomètres sont traités pour obtenir un signal de mesure commun, caractérisé en ce qu'un manomètre à frottement gazeux est utilisé comme deuxième manomètre, de manière que les signaux des deux manomètres individuels, dependant en sense invers de la nature du gas et de la masse moléculaire d'un gas à mesurer, sont traités de manière, que les dépendences individuels de la nature du gas se compensent largement et qu'un signal de mesure commun est formé étant indépendant de la nature du gas.

2. Procédé selon la revendication 1, caractérisééé en ce que les signaux de mesure du manomètre à conductibilité thermique et les signaux de mesure du manomètre à frottement gazeux sont superposés linéairement pour former un signal de mesure commun.

3. Procédé selon la revendication 1 ou 2, caractérisé en ce que les signaux de mesure du manomètre à conductibilité thermique et les signaux de mesure du manomètre à frottement gazeux sont additionnés pour former un signal de mesure commun.

4. Procédé selon la revendication 1, caractérisé en ce que les signaux de mesure du manomètre à conductibilité thermique et les signaux de mesure du manomètre à frottement gazeux sont mulitpliés pour former un signal de mesure commun.

5. Procédé selon la revendication 4, caractérisé en ce que les signaux sont pondérés avant leur multiplication.

6. Procédé selon l'une des revendications 1 à 5, caractérisé en ce que les signaux sont soumis à un traitement préliminaire avant la formation d'un signal de mesure commun par pondération et/ou par épuration des effets zéro et/ou par traitement logarithmique.

7. Procédé selon l'une des revendications 1 à 6, caractérisé en ce que des valeurs correctives sont associées au signal de mesure commun.

8. Procédé selon la revendication 7, caractérisé en ce que les valeurs correctives sont des valeurs à écart constant (erreurs systématiques).

9. Procédé selon l'uns des revendications 1 à 8, caractérisé en ce que, pour servir de manomètre à conductibilité thermique, on utilise un manomètre de Pirani et pour servir de manomètre à frottement gazeux on utilise un manomètre à quartz à diapason.

10. Procédé selon la revendication 9, caractérisé en ce que le manomètre de Pirani est utilisé pour servir de thermostat au manomètre à cristal de quartz ou en ce que le manomètre à cristal de quartz est utilisé pour servir de manomètre de Pirani.

11. Manomètre de compensation pour mesurer, de manière indépendante de la nature du gaz, des pressions, de préférence, un vide, caractérisé par la disposition d'un manomètre à conductibilité thermique et d'un manomètre à frottement gazeux à l'intérieur d'un espace de mesure commun et par la présence d'une unité de traitement des signaux couplée aux manomètres, unité au moyen de laquelle les signaux des deux manomètres sont combinés en un signal de sortie commun.

12. Manomètre de compensation selon la revendication 11, caractérisé en ce que, dans l'unité de traitement des signaux, est prévue une fonction grâce à laquelle des valeurs correctives peuvent être imprimées au signal commun.

13. Manomètre de compensation selon la revendication 11 ou 12, caractérisé en ce qu'un manomètre de Pirani et un manomètre à quartz à diapason sont disposés à l'intérieur d'un espace de mesure commun et en ce que l'unité de traitement des signaux est une unité de sommation.

14. Manomètre de compensation selon la revendication 11 ou 12, caractérisé en ce qu'un manomètre de Pirani et un manomètre à quartz à diapason sont disposés à l'intérieur d'un espace de mesure commun et en ce que l'unité de traitement des signaux est une unité de multiplication.

15. Manomètre de compensation selon les revendications 11 à 15, caractérisé en ce que, en aval du manomètre de Pirani et du manomètre à quartz à diapason et en amont du circuit prévu pour la combinaison des signaux, sont prévus des circuits pour le traitement préliminaire desdits signaux.

16. Manomètre de compensation selon la revendication 15, caractérisé en ce que le circuit pour le pré-traitement des signaux contient des fonctions de logarithmique.

17. Manomètre de compensation selon l'une des revendications 1 à 9, caractérisé par la présence de moyens pour la numérisation des signaux manométriques et des moyens pour l'analyse des signaux numérisés.

18. Manomètre de compensation selon l'une des revendications 11 à 17, caractérisé en ce que la fonction thermostatique du manomètre à cristal de quartz est réalisée de manière à constituer une partie d'un manomètre de Pirani.
